# EUROPÄISCHE PATENTANMELDUNG

(11) **EP 1 793 437 A2**
(43) Veröffentlichungstag der Anmeldung: **06.06.2007**
(21) Anmeldenummer: 06120401.2
(22) Anmeldetag: 08.09.2006
(51) Int. Cl.: H01M 8/02, H01M 8/04

(54) **Elektrolyt, Elektrode und Katalysatorelektrode zur Verwendung in einer Brennstoffzelle**

(30) Priorität: 09.09.2005 DE 102005043194
(71) Anmelder: Institut für Energie- und Umwelttechnik e.V. (IUTA) - Institut an der Universität Duisburg - Essen, 47229 Duisburg (DE)
(72) Erfinder: Dr. Erich, Egon, 47475, Kamp-Lintfort (DE)
(74) Vertreter: Cohausz & Florack

(57) **Zusammenfassung**

Dargestellt und beschrieben ist ein Elektrolyt, eine Elektrode und eine Katalysatorelektrode (3) jeweils zur Verwendung in Brennstoffzellen sowie einen solchen Elektrolyten (6), eine solche Elektrode und/oder eine solche Katalysatorelektrode aufweisende Brennstoffzelle. Damit die Temperaturempfindlichkeit, der Aufwand für die Befeuchtung, die Gefahr einer Vergiftung des Katalysators und der Preis gesenkt werden können, ist vorgesehen, dass beim Elektrolyt (6) wenigstens ein Zeolith als wirksame Komponente zur Leitung von H⁺-Ionen vorgesehen ist. Bei der Elektrode zur Verwendung einer Brennstoffzelle ist ein metallausgetauschter Zeolith als wenigstens eine Komponente vorgesehen. Wird eine Katalysatorelektrode (3) verwendet, so sind entweder ein Metallschaum mit einer offenporigen Gerüststruktur oder Metallspäne in einer lockeren Schüttung, jeweils in Verbindung mit einer katalytisch aktiven, metallischen Komponente vorgesehen.

## Beschreibung

Die Erfindung betrifft einen Elektrolyt, eine Elektrode und eine Katalysatorelektrode jeweils zur Verwendung in Brennstoffzellen sowie einen solchen Elektrolyten, eine solche Elektrode und/oder eine solche Katalysatorelektrode aufweisende Brennstoffzelle.

Die Entwicklung der Brennstoffzelle als Energielieferant der Zukunft wird weltweit forciert. Dabei sind die Vorteile der Brennstoffzellentechnologie, z.B. beim Einsatz in der Fahrzeugtechnik, gegenüber Verbrennungsmotoren hinsichtlich unkontrollierten CO2-, NOₓ-, Schwermetall- und Russ-Emissionen, Wirkungsgraden und Arbeitstemperaturen nicht zu übersehen. Als großen ökologischen Vorteil der Brennstoffzellenantriebe gegenüber konventionellen Antriebskonzepten wird allgemein die Null-Emission von Schadstoffen und der bessere Wirkungsgrad gegenüber fossilen Energielieferanten angesehen.

Die verschiedenen Typen von Brennstoffzellen werden nach der Art des Elektrolyten bzw. nach Art der Ionenaustauschermembran eingeteilt.

Die alkalische Brennstoffzelle (AFC) benötigt hochreinen Wasserstoff und hochreinen Sauerstoff als Reaktionspartner. Als Elektrolyt wird Kalilauge verwendet, in der OH⁻-Ionen von der Kathoden- zur Anodenseite wandern. Damit verbunden ist allerdings auch eine sehr hohe Empfindlichkeit gegenüber Kohlenmonoxid und Kohlendioxid. Die AFC zählt mit einer Arbeitstemperatur von max. 80°C zu den Niedertemperaturbrennstoffzellen.

Mit einer Arbeitstemperatur zwischen 170 und 200 °C ist die Phosphorsaure Brennstoffzelle (PAFC) für den Einsatz als Blockheizkraftwerk in der dezentralen Energieversorgung geeignet. Neben Erdgas können auch Wasserstoff oder Sondergase verstromt werden. Der Elektrolyt der PAFC besteht aus flüssiger Phosphorsäure, die in einer Matrix gebunden ist. Im Betrieb wandern H⁺-Ionen von der Anode zur Kathode. An der Anode wird Wasserstoff und an der Kathode Luft-Sauerstoff zugeführt.

Der Elektrolyt der Schmelzkarbonat-Brennstoffzelle (MCFC) besteht aus einer Mischung von Kaliumkarbonat K₂CO₃ und Lithiumkarbonat Li₂CO₃ die in eine Matrix eingebunden ist. Der Schmelzpunkt des Karbonatgemisches liegt bei ca. 480 °C. Bei der Betriebstemperatur von 650 °C weist die Salzschmelze eine gute elektrolytische Leitfähigkeit auf. Die MCFC kann mit Erdgas oder Sondergasen betrieben werden. Je nach Konzept wird der erforderliche Wasserstoff durch eine externe oder interne Reformierung produziert. Die Kathodenkammer der MCFC wird mit einem Gemisch aus Luft und Kohlendioxid gespeist. Der Sauerstoff der Luft und das Kohlendioxid lösen sich im Elekrolyten und bilden dort neue CO₃²⁻-Ionen. Der Elektrolyt fungiert als CO₃²⁻-Ionenleiter. Während des Prozesses wandern CO₃²⁻-Ionen durch die Karbonatschmelze von der Kathode zur Anode und reagieren dort mit dem Wasserstoff zu Kohlendioxid und Wasser.

Der Elektrolyt der Oxidkeramischen Brennstoffzelle (SOFC) besteht aus einer Zirkondioxidkeramik. Die Dotierung mit Yttriumoxid ermöglicht eine gute Leitfähigkeit für O₂²⁻-Ionen bei Temperaturen oberhalb von 800 °C. Da die Arbeitstemperatur der SOFC bei 900 bis 1000 °C liegt, lässt sich auch in diesem Fall die Reformierung in die Zelle integrieren. Die SOFC kann mit Erdgas oder Sondergasen betrieben werden. Der Sauerstoff der Luft wird an der Phasengrenzfläche Kathode/Elektrolyt zu O₂²⁻-Ionen reduziert, die von der Kathode, die mit Luft versorgt wird, zur Anode wandern, um dort mit dem Wasserstoff zu Wasser reagieren.

Die Polymermembran-Brennstoffzelle (PEMFC) wird anodenseitig mit Wasserstoff und kathodenseitig mit Luft-Sauerstoff betrieben. Aufgrund der geringen CO-Akzeptanz der Zelle (maximal 10 ppm) sind die Anforderungen an die Brennstoffaufbereitung relativ hoch. Die Verwendung von reformiertem Erdgas ist durch zusätzliche Aufbereitungsstufen (shift Stufen) sowie eine abschließende Gasfeinreinigung (z.B. selektive CO-Oxidation) möglich. Bei der elektrochemischen Reaktion im Zellstapel wandern H⁺-Ionen durch den festen Elektrolyten von der Anode zur Kathode. Die PEMFC hat eine Arbeitstemperatur von ca. 80 °C

Die gegenwärtig stärksten Forschungsaktivitäten sind bei den PEMFC zu verzeichnen. Die niedrige Betriebstemperatur von unter 100 °C und die Nutzung eines polymeren Festelektrolyten ermöglichen den modularen Aufbau des Systems zu kompakten Einheiten, den sogenannten Stacks. Diese Systeme können sowohl im Leistungsbereich von wenigen W bis hin zu einigen kW zur Stromversorgung stationärer wie auch portabler Systeme eingesetzt werden.

Die H⁺-Ionen diffundieren wie bei einer semipermeablen Membran durch die üblicherweise als polymerer Elektrolyt eingesetzte Nafionmembran.

In der PEMFC wird elektrische Energie durch direkte Umwandlung von Energie in Umkehrung der WasserElektrolyse aus chemischer Energie erzeugt. Die Einzelzelle, die prinzipiell aus zwei Elektroden besteht, zwischen denen sich der Elektrolyt befindet, liefert kontinuierlich Strom, indem die zu oxidierende Substanz - in der PEMFC dient Wasserstoff als Brennstoff, der durch Spaltung von Erdgas, Methanol und dergleichen gewonnen wird - sowie das Oxidationsmittel kontinuierlich zu- und die Oxidationsprodukte kontinuierlich abgeführt werden.

Der Brennstoff Wasserstoff wird an der Anode mit Hilfe eines Katalysators in Kationen unter Freigabe von Elektronen an die Anode umgesetzt. Die Elektronen fließen über einen elektrischen Verbraucher zur Kathode. Dort nimmt das Oxidationsmittel Sauerstoff die Elektronen auf, wodurch der Sauerstoff zum Anion wird und mit H⁺-Ionen zu Wasser reagiert, das durch die Kanäle abgeführt wird.

Anode: 2H₂ = 4H+ + 4e⁻

Kathode: O₂ + 4e⁻ + 4H⁺ = 2 H₂O

Die Betriebsbedingungen für Brennstoffzellen stellen erhöhte Anforderungen an die Werkstoffe. Die auf poröse Elektroden, z.B. aus Graphit, aufgebrachten Katalysatoren sind in der Regel Edelmetalle oder Raney-Nickel, Wolframcarbid, Molybdän- oder Wolframverbindungen.

Vor dem Einsatz der Anoden-Feedgase in den Brennstoffzellen ist jeweils eine aufwendige und teure Gasreinigung bzw. Gasaufbereitung nötig, um die Katalysatoren und die Elektrolyten in der Brennstoffzelle nicht zu schädigen. Trotz der intensiven Gasreinigung ist beim Dauerbetrieb einer Brennstoffzelle die Belegung der Katalysatoren und die Inaktivierung der Elektrolyten durch Verunreinigungen der Feedgase, z.B. mit hochmolekularen organischen Verbindungen, nicht auszuschließen. Als Folge der Verunreinigung ist das Absinken der Zellenleistung zu beobachten.

Ein weiteres Problem, welches insbesondere bei den Niedertemperaturbrennstoffzellen auftritt, ist die Temperaturempfindlichkeit der Elektrolytmembran, die durch erhöhte Temperaturen (hot spots) irreparabel geschädigt oder gar zerstört werden können.

Die Verwendung von Nafion als Elektrolytmembran für PEMFC führte zu einem gewissen Durchbruch in der Brennstoffzellentechnik. Nafion ist eine Polymermembran auf der Basis perfluorierter Kohlenwasserstoffe mit chemisch fixierten Sulfonsäuregruppen an der Polymerkette. Beim Betrieb der PEMFC lagert sich Wasser um die Sulfonsäuregruppen an. Der Ladungstransport erfolgt über Migration von H₃O⁺-Ionen in den Wasserclustern und über die Leitung von H⁺-Ionen über Wasserstoffbrückenbindungen. Ohne Wasser ist demgemäß die Nafionmembran nicht leitfähig. Die Gewährleistung eines gewissen Wassergehaltes in der Membran und die Abführung des Produktwassers der elektrochemischen Wasserstoffumsetzung stellt eine große Herausforderung an die PEMFC dar.

Ein weiterer Nachteil der Nafionmembran ist die relativ hohe Temperaturempfindlichkeit. Die Betriebstemperatur sollte deutlich unter 100 °C liegen. Dann ist jedoch die Empfindlichkeit des Pt-Katalysators der PEMFC gegenüber Spuren von CO stark ausgeprägt, weshalb eine intensive CO-Abreinigung des Feedgases notwendig ist.

Die wesentlichen Nachteile der PEMFC sind also die Temperaturempfindlichkeit, die Notwendigkeit der Befeuchtung der Membran, die Katalysatorvergiftung durch CO und der Preis.

Daher liegt der vorliegenden Erfindung die Aufgabe zugrunde, die eingangs beschriebene und zuvor näher erläuterte Brennstoffzelle sowie den Elektrolyten und die Katalysatorelektroden derart weiterzubilden und auszugestalten, dass die Temperaturempfindlichkeit, der Aufwand für die Befeuchtung, die Gefahr einer Vergiftung des Katalysators und der Preis gesenkt werden können.

Diese Aufgabe ist bei dem eingangs genannten Elektrolyten gemäß **Anspruch 1** dadurch gelöst, dass wenigstens ein Zeolith als wirksame Komponente zur Leitung von H⁺-Ionen vorgesehen ist.

Zeolithe sind Salze, die aus Kationen und Anionen aufgebaut sind. Während die Kationen (z. B. Na⁺,Ca²⁺, H₃O⁺) wie bei gewöhnlichen Salzen einzelne Teilchen sind, sind die zugehörigen Anionen gitterartige, weit ausgedehnte Aluminosilikatstrukturen aus Silizium, Aluminium und Sauerstoff. In den Porenöffnungen des Zeolithen sitzen die Kationen und haben dort eine gewisse Bewegungsfreiheit. Sie können von einer Pore in die nächste Pore wandern oder auch das Gitter verlassen. So kommt es, dass die Kationen verhältnismäßig leicht ausgetauscht werden und neutrale Moleküle zusätzlich in den Poren vorhanden sein können.

Neben den charakteristischen Merkmalen, wie der chemischen Beständigkeit sind es vor allem die Form und Größe der Poren sowie die Ladungsverteilung in den Poren, die das Verhalten eines Zeolithen bestimmen.

In große Poren können naturgemäß größere Moleküle eindringen als in kleinere Poren (daher der "Siebeffekt" der Zeolithe und die auch verwendete Bezeichnung Molekularsieb). Kleine Poren binden die Teilchen fester als große Poren (wegen der höheren Ladungsdichte in kleineren Poren und den wirkenden Bindungskräften). Die Porengröße lässt sich bei der Fertigung der Zeolithe durch die Wahl des Templats einstellen, also einer Verbindung, die bei den selbstorganisierten Wachstumsprozessen zur Bildung der gewünschten Zeolithe gezielt die gewünschten makromolekulare Strukturen erzwingen.

Zeolithe sind künstlich erzeugte oder natürlich vorkommende Aluminosilikate mit einer wohl definierten Gerüststruktur, die aus Silicium- und Aluminiumoxidtetraedern als primären Baueinheiten besteht. Die einzelnen Tetraeder bilden durch Sauerstoffbrücken sekundäre Baueinheiten, die sich wiederum zu tertiären Baueinheiten zusammenlagern. Aus der Kombination von sekundären und tertiären Baueinheiten entsteht eine Kristallstruktur, die von Poren und Kanälen durchsetzt ist.

Sehr wichtig, aber bei der Herstellung der Zeolithe schwierig zu kontrollieren, ist die Beschaffenheit der äußeren Form. Feine Pulver können für die meisten Anwendungen, wie in Adsorptionsanlagen (hoher Druckverlust), nicht verwendet werden, wohl aber für die Anwendung in Brennstoffzellen. Für Pellets , Wabenkörper oder andere Formlinge muss das aus wenigen Mikrometern großen Kristalliten bestehende Zeolithpulver mit einem Bindemittel wie etwa Ton, Graphit und/oder Aluminiumoxid in die entsprechende Form gebracht und gehärtet werden. Das Bindemittel kann dabei einen beträchtlichen Gewichtsanteil des resultierenden zeolithischen Formkörpers ausmachen.

Beim natürlichen Zeolith Analcim weist das Verhältnis von Silizium zu Aluminium (Si/Al-Verhältnis) einen Wert von 2 auf. Die Struktur des Zeolithen wird also durch doppelt so viel Silizium wie Aluminium aufgebaut. Bei synthetischen Zeolithen können durch ausgefeilte Produktionsverfahren Verhältnisse von über 3.000 erreicht werden.

Hydrophobe, d.h. aluminiumarme Zeolithe werden verwendet, um z.B. aus großen Mengen Wasser oder aus Abgasen organische Inhaltsstoffe zu entfernen. Diese Zeolithe binden apolare Lösungsmittel besser als Wassermoleküle, was nicht bedeutet, dass sie gar kein Wasser oder sonstige polare Moleküle (wie H₂S oder NH₃) adsorbieren.

Bei der Herstellung hydrophober Zeolithe werden Anteile des Aluminiums abstrahiert oder AlO₄-Bausteine durch SiO₄-Bausteine ersetzt. Hydrophobe Zeolithe sind saurer und damit basenempfindlicher als hydrophile Typen. Dies liegt daran, dass die wenigen Aluminiumatome im Gitter sehr isoliert und ihre Ladung somit nicht verteilt wird. Mit diesen Zeolithen können daher säurekatalysierte Reaktionen durchgeführt werden.

Wenn beim Aufbau von Silicaten vierwertige Si-Atome durch dreiwertige Al-Atome ersetzt werden, entsteht aufgrund der unterschiedlichen Kernladungszahlen ein negativer Ladungsüberschuss im Gerüst. Im Innern der Poren und Kanäle befinden sich dann Protonen sowie Metall-Kationen, um diesen Ladungsüberschuss auszugleichen. Ein charakteristisches Merkmal der Zeolithe ist die Austauschfähigkeit dieser gebundenen Ionen gegen andere.

Aufgrund der Poren und Kanäle, deren Abmessungen bei den synthetischen Zeolithen genau definiert sind, dienen Zeolithe, wie bereits beschrieben auch zur Separation einzelner Verbindungen. Daher werden Zeolithe auch als Molekularsiebe bezeichnet, wobei die Geometrie der Zeolithe sehr exakt auf die anstehende Trennaufgabe angepasst werden kann (tailormade zeolites).

Zeolithe können in chemischen Reaktionen wie Säuren wirken, sie besitzen dabei jedoch die Besonderheit, dass ihre sauren Eigenschaften, die durch den Austausch der beispielsweise Alkalimetallionen durch H⁺-Ionen hervorgebracht werden, ausschließlich im Innern der Hohlräume zum Tragen kommen. Demnach sind Zeolithe in der Protonenform so genannte Festkörpersäuren, deren Säurestärke etwa der von 100%iger Schwefelsäure entsprechen kann.

Die Erfindung hat letztlich erkannt, dass geeignete Zeolithe ähnlich wie die Polymerelektrolyte als Elektrolyte in Brennstoffzellen eingesetzt werden können, wobei die definierten Kanal- und Porengrößen auch eine schnellere Produktwasserabführung, die bei PEMFC über die sogenannten Diffusionslayer erfolgt, ermöglichen und die Produktwasserabführung wesentlich vereinfachen.

Die Erfindung hat dabei insbesondere überraschender Weise erkannt, dass sich eine besondere Klasse von Zeolithen nach einer sauren Aufarbeitung als Ersatz für die bekannte Nafionmembranen von PEMFC eignen.

Besonders geeignet sind aufgrund ihrer Säurestärke und/oder ihrer Porengefüges Zeolithe des Typs A, X, Y, H-USY und/oder HZSM-5.

Die Aufzählung der geeigneten Zeolithe ist jedoch nicht abschließend. Geeignet sind ganz allgemein ultrasaure Zeolithe, insbesondere wasserstoffausgetauschte vornehmlich zusätzlich ultra stabile Zeolithe ähnlich der Typen H-USY und HZSM-5 und anderen aufbereiteten synthetisch hergestellte Zeolithen mit entsprechend eingestellter Acidität.

Ganz grundsätzlich sollten die Zeolithe, um eine hinreichende Säurestärke aufweisen zu können ein Si/Al-Verhältnis von größer gleich 10 aufweisen. Höhere Säurestärken können allerdings bereitgestellt werden, wenn das Si/Al-Verhältnis größer gleich 20 ist, was sich Vorteilhaft auf die Leitung bzw. Diffusion von H⁺-Ionen durch den Zeolithelektolyt auswirkt.

Noch geeignetere Porenstrukturen und/oder Stabilitätswerte des Zeolithen bei gleichzeitiger möglicher Erhöhung der Säurestärke können erhalten werden, wenn das Si/Al-Verhältnis Werte von größer gleich 50, vorzugsweise größer gleich 100 annimmt. Das Einstellen solcher Si/Al-Verhältnisse kann jedoch mit einem höheren Aufwand verbunden sein.

Überaus vorteilhafte Zeolithe weisen Si/Al-Verhältnisse von größer gleich 500, vorzugsweise größer gleich 1000 auf. Diese Zeolithe sind jedoch grundsätzlich aufwendig und kostenintensiv in ihrer Herstellung. In Abhängigkeit der jeweiligen Anforderung hinsichtlich der Performance einer entsprechenden Brennstoffzelle kann dies aber in Kauf genommen werden.

Grundsätzlich kann das geeignete Si/Al-Verhältnis durchaus stark vom jeweiligen Einzelfall abhängen, auch wenn theoretisch geringere Si/Al-Verhältnisse prinzipiell Vorteile bieten.

Auch der Typ des Zeolithen ist hierbei von Bedeutung, da der Zeolith beim entsprechenden Si/Al-Verhältnis einerseits hinreichend stabil sein muss und insgesamt eine Optimierung zwischen dem Porengefüge, also der Porosität und der Größenverteilung der Poren des Zeolithen, sowie der generellen oder durch Austauschprozesse angehobenen Säurestärke angestrebt wird.

Vorzugsweise liegt der Zeolith als wirksame Komponente in einem Gemisch mit einem Binder vor, das zu einem Formling geformt ist. Der Formling weist dabei vorzugsweise eine symmetrische Form insbesondere entsprechend eines Zylinders, einer Scheibe oder einer rechteckigen bzw. quadratischen Platte auf, um ohne weiteres zum Aufbau wenigstens einer Brennstoffzelle verwendet zu werden. Je nach angestrebter Geometrie der Brennstoffzelle kann der Formling dabei vorzugsweise als Pellet, Pulver oder Wabenkörper verwendet werden.

Sofern ein Bindemittel zum Einsatz kommen soll, kommt hierbei insbesondere Ton, Graphit Aluminiumoxid oder eine Mischung davon in Frage, da diese kostengünstig verfügbar und leicht zu handhaben sind sowie die Porosität des Zeolithen im Formling nicht verblocken.

Die eingangs genannte Aufgabe ist ferner bei einer Elektrode der eingangs genannten Art gemäß Anspruch 12 dadurch gelöst, dass ein metallausgetauschter Zeolith als wenigstens eine Komponente der Elektrode vorgesehen ist.

Die Erfindung hat nämlich auch überraschender Weise erkannt, dass geeignete Zeolithe, die mit entsprechenden Metallen ausgetauscht wurden, vorteilhaft in einer Brennstoffzelle als Elektrode eingesetzt werden können.

Dazu werden die Zeolithe, vorzugsweise vom Typ A, X, Y, H-USY, HZSM-5 und andere aufbereitete synthetisch hergestellte Zeolithe ggf. mit entsprechend eingestellter Säurestärke, mit einem Metall ausgetauscht, d.h. die innere Oberfläche wird partiell mit dem Metall belegt.

Bei dem Metall kann es sich vorzugsweise um ein Edelmetall wie Pt oder Pd handeln. Es kommen aber auch andere Metalle wie Ni, Cr, Cr/Ni, Al, Fe und/oder Fe-Legierungen in Frage.

Die Elektrode kann neben dem Metall und dem Zeolithen auch noch einen Anteil eines Bindemittels aufweisen. Als Bindemittel kommt hierbei insbesondere Ton, Graphit Aluminiumoxid oder eine Mischung davon in Frage, da diese kostengünstig verfügbar sind, leicht zu handhaben sind und die Porosität des Zeolithen im Formling nicht verblocken.

Das Bindemittel erlaubt es letztlich eine Elektrode in einer gewünschten Form herzustellen. Die Elektrode weist dabei vornehmlich eine symmetrische Form insbesondere entsprechend eines Zylinders, einer Scheibe oder einer rechteckigen bzw. quadratischen Platte auf, um ohne weiteres zum Aufbau wenigstens einer Brennstoffzelle verwendet zu werden. Auch im Hinblick auf die Elektrode können Pellet- oder Wabenkörperstrukturen vorteilhaft sein.

Die ein Bindemittel aufweisende Elektrode ist vorzugsweise getempert und anschließend Wasserstoffaktiviert, etwa um eine gewünschte Porenstuktur zu erhalten.

Durch die Austauschfähigkeit von Elementen an der inneren Oberfläche der Zeolithe, insbesondere auch von Edelmetallen und ggf. der einstellbaren Säurestärke eröffnen sich vielfältige Anwendungen. Daher ist es besonders bevorzugt, wenn der Zeolith mittels vorzugsweise Pd oder Pt ggf. aber auch mit einem anderen katalytisch aktiven Metall wie Ni, Cr, Cr/Ni, Al, Fe oder Fe-Legierungen ausgetauscht ist.

Bei den Katalysatoren kann es sich um einen Zeolithen handeln, der mit Platin und einem mineralischen Binder, z.B. Aluminiumoxid, versetzt und zu einer Scheibe geformt ist. Die Katalysatorscheibe ist dann vorzugsweise anstelle der Standardkatalysatoren in der Röhren- oder Plattenform einer Brennstoffzelle vorzusehen.

So ist es beispielsweise möglich, katalytisch aktive Elemente an der inneren Oberfläche des Zeolithen anzulagern, was eine selektive Katalyse an der eigentlichen Elektrode ermöglicht. Man erhält letztlich eine Katalysatorelektrode, welche nicht nur als Elektrode dient, sondern auch noch katalytisch Wasserstoffmoleküle spaltet.

Die katalytisch aktive Komponente wie beispielsweise Pt oder Pd kann auf den Träger durch Fällung aus seinem Nitratsalz fixiert werden. Nach dem Fällungsschritt wird der Rohling bei 450°C getempert und langsam bei Temperaturen um 300°C mit Wasserstoff in einem separaten Reaktor aktiviert.

Durch die Implementierung von entsprechend als Katalysator oder Elektrolyt konfigurierten Zeolithen ist es aufgrund der Temperaturstabilität der Zeolithe möglich, die Brennstoffzellen bei höheren Temperaturen zu betreiben. Dadurch kann das gebildete Produktwasser gasförmig abgeführt werden, was weitere Vorteile insbesondere bei der Wärmeauskopplung mit sich bringt. Die Porengeometrie der Zeolithe ermöglicht eine schnelle Produktwasserabführung auch als Kondensat gegenüber einer üblichen PEMFC.

Die höheren Betriebstemperaturen verringern auch die Gefahr einer Vergiftung des Katalysators durch z.B. CO. Dadurch entfällt die Notwendigkeit der Feinreinigung des Wasserstoffs, der, wenn er aus Erdgas oder dergleichen durch Reformierung erzeugt wird, immer auch CO enthält.

Als Katalysatoren kommen auch zielgerichtet hergestellte Metallspäne-Katalysatoren in Frage, die gleichzeitig als Elektroden dienen. Metallspäne-Katalysatoren sind für sich bekannt (DE 198 15 004 C1).

Als Katalysatorträger kommen auch poröse Scheiben mit Graphit als Binder in Frage. Die Elektrodenfunktion übernimmt bei Aluminiumoxid- und Zeolithgeträgerten Katalysatoren ein in die Katalysatorscheiben integriertes, in der Maschenweite angepasstes Metallgitter.

Die eingangs genannte Aufgabe ist ebenfalls bei einer Elektrode der eingangs genannten Art gemäß Anspruch 17 bzw. **Anspruch 21** dadurch gelöst, dass ein Metallschaum mit einer offenporigen Gerüststruktur bzw. Metallspäne in einer lockeren Schüttung und eine katalytisch aktive, metallische Komponente vorgesehen ist.

Dieser Lösung liegt der Gedanke zugrunde, dass anstelle eines Zeolithen auch Metallschäume oder - späne als Träger für die katalytisch aktiven Komponenten eingesetzt werden können. Diese Katalysatoren stellen in einer Brennstoffzelle gleichzeitig die Elektroden dar. Diese Katalysatoren ergeben auf Grund der Porengeometrie des Trägers eine sehr feine, homogene Gasverteilung bei einer hohen katalytischen Aktivität.

Die Katalysatoren dienen der Spaltung von Wasserstoff und können dafür als katalytisch aktive Komponente beispielsweise die Edelmetalle Pd oder Pt aufweisen. Die katalytisch aktive Komponente kann aber auch Ni, Cr, Cr/Ni, Al, Fe, eine Fe-Legierungen oder ein anderes Metall sein. Die aktiven Komponenten sind vorzugsweise mittels chemischer oder elektrochemischer Abscheidung auf ein geschäumtes Metall aufgebracht worden. Insbesondere durch die elektrochemische Abscheidung wird ein stabiler, hochaktiver Katalysator erhalten.

Ebenso ist es möglich, dass Metallschäume, die selbst aus Pd oder Pt, aus Kostengründen vorzugsweise Ni, Cr, Cr/Ni, Al, Fe, Fe-Legierungen und anderen Metallen bzw. Metallkombinationen bestehen können, die katalytisch aktive Komponente bilden oder wenigstens auch umfassen. Im Übrigen kann man den Metallschaum auch durch eine rein chemische Fällung der katalytisch aktiven Komponenten zum gewünschten Katalysator aufbauen.

Die eingangs genannte Aufgabe ist zudem bei einer Brennstoffzelle der eingangs genannten Art gemäß **Anspruch 22** dadurch gelöst, dass ein Elektrolyt nach einem der Ansprüche 1 bis 11, eine Elektrode nach einem der Ansprüche 12 bis 16 und/oder eine Katalysatorelektrode nach einem der Ansprüche 17 bis 21 vorgesehen ist.

Die Erfindung eröffnet insbesondere auch wegen der verringerten Komplexität des Brennstoffzellensystems insgesamt die Möglichkeit die Herstellungskosten zu senken. Gleichzeitig kann das Wassermanagement vereinfacht und die Empfindlichkeit des Katalysators gegenüber Katalysatorgiften verringert werden. Nicht zuletzt ergibt sich aber auch eine effizientere Wärmeauskopplung durch die aus der Anhebung der Betriebstemperatur resultierenden, höheren Temperaturgradienten gegenüber der PEMFC.

Der Einsatz von Katalysatoren auf Zeolith- bzw. auf Metallschaumbasis führt neben der Vereinfachung der Gesamtanordnung auch auf Grund der höheren katalytischen Aktivität gegenüber den üblicherweise eingesetzten Katalysatoren zu einer höheren Performance der Brennstoffzellen.

Durch die Verwendung von Zeolithen ist es auch möglich, die Elektroden, den Katalysator oder die Katalysatoren und den Elektrolyten als ein Bauteil zu fertigen. Das Bauteil weist dann vorzugsweise unterschiedliche Layer auf, wobei im äußeren Bereich wenigstens ein Layer mit einer katalytisch aktiven Komponente vorhanden ist.

Ferner sind an zwei einander gegenüberliegenden Bereichen metallausgetauschte Zeolithe vorhanden, die als Elektroden im Stromkreis eines Stacks oder mehrerer Stacks fungieren. Im zentralen Bereich dieses Bauteils spielen dann metallausgetauschte Zeolithe eine untergeordnete Rolle und können daher zu einem geringen Anteil oder gar einem Anteil von Null vorgesehen sein. In diesem Zentralen Bereich des Bauteil können dagegen vorzugsweise wasserstoffausgetauschte Zeolithe vorhanden sein.

Die entsprechenden Layer des Bauteils bzw. die in den einzelnen Layern vorhandenen Zeolithe sind dann vorzugsweise mit Bindemittel zu dem einen Bauteil zusammengefasst. Als Bindemittel kommen die bereits zuvor diskutierten Bindemittel in Frage, während das Bauteil in seiner Form an eine Platte, einen Quader, einen Würfel einen Hohlzylinder oder einen Vollzylinder erinnern kann. Die bevorzugte Form des Bauteils ist dabei abhängig von der bevorzugten Bauform der Brennstoffzelle.

Alternativ oder zusätzlich kann vorgesehen sein, dass es sich bei der Brennstoffzelle um einen Mikrorohrbündelreaktor handelt. So ist es möglich, mehrere Dutzend Kapillarröhren zu einem Stack aufzubauen und diese Stacks zu einem Gesamtsystem zusammenzuschalten. Der Wasserstoff bzw. Wasserstoffionen und die Reaktionspartner wandern analog den bekannten Prinzipien einer Kapillare bei der Gaschromatographie durch in die Zeolithschicht.

Die Bauform "Kapillarröhren" bietet sich aufgrund der geringeren Abmessungen an. Die Mikrorohre haben deshalb vorzugsweise einen Durchmesser von kleiner gleich 10 mm vorzugsweise kleiner gleich 2,5 mm.

Die Einzelstacks bzw. die einzelnen Mikrorohre können bedarfsweise gegenläufig so zusammengeschaltet sein, dass mit einer entsprechenden Brennstoffzelle auch Wechselstrom generiert werden kann. Es ist jedoch auch möglich, anstelle der Mikrorohre plattenförmige Brennstoffzellen einzusetzen.

Einfach und funktional ist es dabei, wenn die Mikrorohre ggf. der gesamte Mikrorohrbündelreaktor aus Glas gefertigt ist, welches auch mit Amiden mechanisch stabilisert sein kann.

Zur Verbesserung des Wassermanagements der Brennstoffzelle mit einem Mikrorohrbündelreaktor ist es bevorzugt, wenn die Mikrorohre der Kathode zugeordnet einen Ablass zum Ausschleusen von Produktwasser und/oder Gas aufweist. Der Ablass ist besonders vorteilhaft bei der Kathode angeordnet.

Im Übrigen kann jeweils wenigstens ein Sicherheitsventil an den Mikrorohren vorgesehen sein, um Beschädigungen infolge eines überhöhten Drucks zu vermeiden.

Unabhängig von der jeweiligen Bauform kann auf diese Weise das Wassermanagement verbessert und für einen unproblematischen Abtransport von dampfförmigen und/oder kondensierten Produktwasser gesorgt werden.

Unerwünschte Schädigungen infolge eines Druckanstiegs können durch die zusätzliche Verwendung eines Sicherheitsventils oder der zusätzlichen Ausbildung des Dampfablasses als Sicherheitsventil vermieden werden.

Bei einem prinzipiellen Aufbau einer solchen Brennstoffzelle ist ein Quarzglasrohr mit 16 mm Durchmesser vorgesehen, in dem sich der Elektrolyt befindet. Das Quarzglasrohr ist an beiden Seiten mittels Katalysatorplatten oder Katalysatorspäne (dotierte, katalytisch aktivierte Metallspäne gemäß DE 198 15 004 C1) und Glasfittingen verschlossen. Durch die Glasfittinge wird Wasserstoff bzw. Sauerstoff (oder Luft) in die mit Zeolith gefüllte Glasröhre zugegeben.

Für den Glasreaktor kann eine Beheizung vorgesehen werden, die hauptsächlich dazu dienen kann, die Katalysatoren auf höhere Reaktionstemperatur zu bringen und um das Produktwasser sofort und vollständig aus dem Zeolithen zu entfernen.

Die Elektrode, Katalysatorelektrode und/oder der Elektrolyt können gemäß einem der Ansprüche 1 bis 20 ausgebildet sein.

Nachfolgend wird die Erfindung anhand einer lediglich ein Ausführungsbeispiel darstellenden Zeichnung näher erläutert. In der Zeichnung zeigen
- Fig. 1: ein Ausführungsbeispiel einer erfindungsgemäßen Brennstoffzelle in einer schematischen Ansicht und
- Fig. 2: die Brennstoffzelle aus Fig. 1, schematisch in einem Schnitt entlang der Ebene II-II aus Fig. 1.

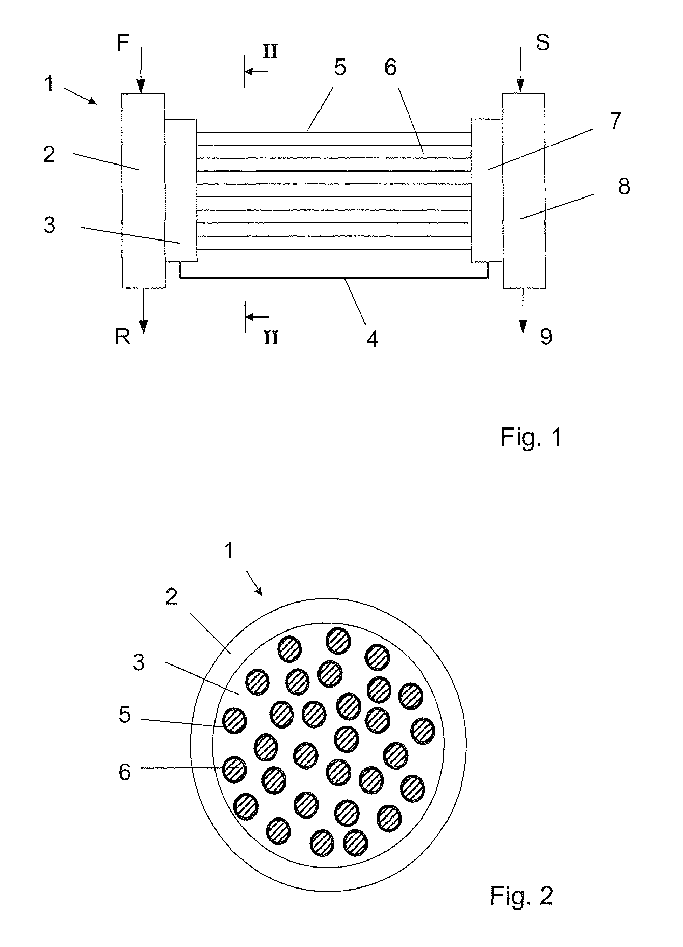

In Fig. 1 ist eine als Mikrorohrbündelreaktor ausgebildete Brennstoffzelle 1 schematisch dargestellt, bei der als Feed F ein Wasserstoffhaltiges Brenngas in einen Anodenraum 2 geleitet wird. Der Feed kommt dort mit einer Katalysatorelektrode 3 in Kontakt. Die Katalysatorelektrode 3 spaltet die Wasserstoffmoleküle und nimmt gleichzeitig in der Funktion einer Anode die dabei frei werdenden Elektonen auf, die von dort in einen angeschlossenen Stromkreis 4 abgegeben werden.

Die an der Katalysatorelektrode 3 entstandenen H⁺-Ionen diffundieren durch die offenporige Gerüststuktur der Katalysatorelektrode 3, die auch durch einen Anteil an Zeolithen gebildet werden kann. Die H⁺-Ionen wandern aufgrund ihrer Ladung von der Anode weiter durch die sich daran anschließenden Mikrorohre 5, in denen ein einen Zeolith aufweisender Elektrolyt 6 vorhanden ist. Auch durch dessen offenporige Struktur diffundieren die H⁺-Ionen weiter, bis sie zur Kathode 7 gelangen.

Die Kathode 7 kann als aktive Komponente ebenfalls einen Zeolithen aufweisen, der für eine offenporige Gerüststruktur der Kathode 7 verantwortlich ist.

An der Grenzfläche zur Kathode 7, die im dargestellten und insoweit bevorzugten Ausführungsbeispiel als reine Elektrode fungiert, kommen die H⁺-Ionen einerseits mit in den Kathodenraum 8 eingeleitetem Sauerstoff S bzw. Luft und andererseits mit über den Stromkreis 4 zur Kathode gewanderten Elektronen in Kontakt. Infolgedessen reagieren die H⁺-Ionen und der Sauerstoff S zu Wasser, welches einerseits über den Kathodenraum 8 und andererseits über einen der Kathode 7 zugeordneten Dampfablass 9, bei dem es sich gleichzeitig um ein Sicherheitsventil handelt, abgeführt wird.

Da der Feed F in der Regel nur anteilig aus Wasserstoff besteht, wird aus dem Anodenraum 2 kontinuierlich auch ein verbleibender, wasserstoffabgereicherter Rest R abgezogen.

Obschon die Katalysatorelektrode 3, der Elektrolyt 6 und die Kathode 7 jeweils wenigstens anteilig einen Zeolithen aufweisen können, bestehen zwischen diesen Bauteilen dennoch Unterschiede.

Die Katalysatorelektrode 3 weist einen Anteil eines teilweise mit Pt ausgetauschten Zeolithen des Typs HZSM-5 auf, der mit einem Binder in Form von Aluminiumoxid versetzt worden ist. Die entsprechende Mischung wurde dann zu einem scheibenförmigen, gaspermeablen Formling verarbeitet und ggf. wasserstoffaktiviert.

Bei der Kathode 7 handelt es sich um einen ebensolchen Formling, bei dem der Zeolith auch beispielsweise aus Platin Pt aktiviert sein kann.

Auch wenn dies nicht dargestellt ist, können die Zeolithe oder katalytisch aktivierte Metallschäume bzw. -späne der Kathode 7 zur Unterstützung der Kathodenreaktion alternativ oder zusätzlich auch mit weiteren katalytisch aktiven Metallen wie etwa den Metallen Pd, Ni, Cr, Cr/Ni, Al, Fe, einer FE-Legierung oder einer Mischung davon ausgetauscht sein.

Die Mikrorohre der in Fig. 1 dargestellten und insoweit bevorzugten Brennstoffzelle weisen ein Gehäuse aus einem hohlzylindrischen Quarzglas auf, in das wasserstoffausgetauschte Zeolithe mit einem Si/Al-verhältnis von größer 100 und kleiner 200 eingebracht sind. Aufgrund des Mantels aus Quarzglas, der einen Außendurchmesser von 1,5 mm aufweist, bedarf es hinsichtlich des Elektrolyten keiner weiteren Formgebung und keines inaktiven Anteils eines Bindemittels.

Anhand des in Fig. 2 dargestellten Schnitts der Brennstoffzelle aus Fig. 1 entlang der Ebene II-II aus Fig. 1 wird die Anordnung der Mikrorohre und des darin vorhandenen Zeoliths ersichtlich. Die Brennstoffzelle ist in der Art eines Rohrbündels ausgebildet, wie es von Rohrbündelwärmeaustauschern bekannt ist. Die Anzahl der Mikrorohre kann dabei relativ frei gewählt werden. Die Anzahl der dargestellten Mikrorohre ist also in keiner Hinsicht als beschränkend zu verstehen.

## Patentansprüche

1. Elektrolyt zur Verwendung in einer Brennstoffzelle,
**dadurch gekennzeichnet, dass** wenigstens ein Zeolith als wirksame Komponente zur Leitung von H⁺-Ionen vorgesehen ist.

2. Elektrolyt nach Anspruch 1,
**dadurch gekennzeichnet, dass** der wenigstens eine Zeolith vom Typ A, X, Y, HZSM-5 und/oder H-USY ist.

3. Elektrolyt nach Anspruch 1 oder 2,
**dadurch gekennzeichnet, dass** die Zeolithe wasserstoffausgetauschte Zeolithe sind.

4. Elektrolyt nach einem der Ansprüche 1 bis 3,
**dadurch gekennzeichnet, dass** wenigstens ein Zeolith ein Si/Al-Verhältnis von ≥ 10 aufweist.

5. Elektrolyt nach Anspruch 4,
**dadurch gekennzeichnet, dass** wenigstens ein Zeolith ein Si/Al-Verhältnis von ≥ 20 aufweist.

6. Elektrolyt nach Anspruch 5,
**dadurch gekennzeichnet, dass** wenigstens ein Zeolith ein Si/Al-Verhältnis von ≥ 50 aufweist.

7. Elektrolyt nach Anspruch 6,
**dadurch gekennzeichnet, dass** wenigstens ein Zeolith ein Si/Al-Verhältnis von ≥ 100 aufweist.

8. Elektrolyt nach Anspruch 7,
**dadurch gekennzeichnet, dass** wenigstens ein Zeolith ein Si/Al-Verhältnis von ≥ 500 aufweist.

9. Elektrolyt nach Anspruch 8,
**dadurch gekennzeichnet, dass** wenigstens ein Zeolith ein Si/Al-Verhältnis von ≥ 1000 aufweist.

10. Elektrolyt nach einem der Ansprüche 1 bis 9,
**dadurch gekennzeichnet, dass** ein Bindemittel als weitere Komponente zur Bildung eines Formlings vorgesehen ist.

11. Elektrolyt nach Anspruch 10,
**dadurch gekennzeichnet, dass** das Bindemittel Ton, Graphit und/oder Aluminiumoxid ist.

12. Elektrode zur Verwendung in einer Brennstoffzelle,
**dadurch gekennzeichnet, dass** ein metallausgetauschter Zeolith als wenigstens eine Komponente der Elektrode vorgesehen ist.

13. Elektrode nach Anspruch 12,
**dadurch gekennzeichnet, dass** ein Bindemittel als weitere Komponente vorgesehen ist.

14. Elektrode nach Anspruch 13,
**dadurch gekennzeichnet, dass** das Bindemittel Ton, Graphit und/oder Aluminiumoxid ist.

15. Elektrode nach Anspruch 13 oder 14,
**dadurch gekennzeichnet, dass** Bindemittel zusammen mit wenigstens einem Zeolith getempert und anschließend wasserstoffaktiviert ist.

16. Elektrode nach einem der Ansprüche 12 bis 15,
**dadurch gekennzeichnet, dass** der Zeolith mit Pt, Pd, Ni, Cr, Cr/Ni, Al, Fe, einer Fe-Legierung oder einer Mischungen davon ausgetauscht ist.

17. Katalysatorelektrode zur Verwendung als Elektrode in einer Brennstoffzelle,
**dadurch gekennzeichnet, dass** ein Metallschaum mit einer offenporigen Gerüststruktur und eine katalytisch aktive, metallische Komponente vorgesehen ist.

18. Katalysatorelektrode nach Anspruch 17,
**dadurch gekennzeichnet, dass** die katalytisch aktive, metallische Komponente chemisch oder elektrochemisch in der offenporigen Gerüststruktur des Metallschaums abgeschieden ist.

19. Katalysatorelektrode nach Anspruch 17,
**dadurch gekennzeichnet, dass** der Metallschaum wenigstens auch aus der katalytisch aktiven, metallischen Komponente gefertigt ist.

20. Katalysatorelektrode nach Anspruch 17,
**dadurch gekennzeichnet, dass** die katalytisch aktive, metallische Komponente Pt, Pd, Ni, Cr, Cr/Ni, Al, Fe, eine Fe-Legierung oder eine Mischungen davon ist.

21. Katalysatorelektrode zur Verwendung als Elektrode in einer Brennstoffzelle,
**dadurch gekennzeichnet, dass** Metallspäne in einer lockeren Schüttung angeordnet sind und auf den Metallspänen eine katalytisch aktive, metallische Komponente vorgesehen ist.

22. Brennstoffzelle mit einem Elektrolyt nach einem der Ansprüche 1 bis 11, mit einer Elektrode nach einem der Ansprüche 12 bis 16 und/oder mit einer Katalysatorelektrode nach einem der Ansprüche 17 bis 21.

23. Brennstoffzelle nach Anspruch 22,
**dadurch gekennzeichnet, dass** die Brennstoffzelle als Mikrorohrbündelreaktor ausgebildet ist.

24. Brennstoffzelle nach Anspruch 23,
**dadurch gekennzeichnet, dass** die Mikrorohre einen Durchmesser von ≤ 10 mm aufweisen.

25. Brennstoffzelle nach Anspruch 24,
**dadurch gekennzeichnet, dass** die Mikrorohre einen Durchmesser von ≤ 2,5 mm aufweisen.

26. Brennstoffzelle nach Anspruch 22,
**dadurch gekennzeichnet, dass** die Brennstoffzelle plattenförmig ausgebildet ist.

27. Brennstoffzelle nach einem der Ansprüche 21 bis 26,
**dadurch gekennzeichnet, dass** Einzelstacks oder einzelne Mikrorohre oder Platten gegenläufig zusammengeschaltet sind und dass die gegenläufige Verschaltung die Generation von Wechselstrom ermöglicht.

28. Brennstoffzelle nach einem der Ansprüche 21 bis 27,
**dadurch gekennzeichnet, dass** ein Sicherheitsventil vorgesehen ist.

29. Brennstoffzelle nach einem der Ansprüche 21 bis 28,
**dadurch gekennzeichnet, dass** ein Dampfablass zum Ausschleusen von Produktwasser der Kathode zugeordnet ist.

30. Brennstoffzelle nach einem der Ansprüche 21 bis 29,
**dadurch gekennzeichnet, dass** die Mikrorohre aus Glas gefertigt sind.

31. Brennstoffzelle nach Anspruch 28,
**dadurch gekennzeichnet, dass** der Mikrorohrbündelreaktor aus Glas gefertigt ist.

32. Brennstoffzelle nach Anspruch 30 oder 31,
**dadurch gekennzeichnet, dass** die Mikrorohre oder der Mikrorohrbündelreaktor aus Glaskapillaren gefertigt und mit Amiden mechanisch stabilisert ist/sind.
